**Europäisches Patentamt**

**European Patent Office**

**Office européen des brevets**

(11) Veröffentlichungsnummer: **0 264 553 B1**

(12) **EUROPÄISCHE PATENTSCHRIFT**

(45) Veröffentlichungstag der Patentschrift: **28.10.92**

(21) Anmeldenummer: **87111304.9**

(22) Anmeldetag: **05.08.87**

(51) Int. Cl.⁵: **H04N 7/173**, H04N 7/16

(54) **Fernsteuereinrichtung.**

(30) Priorität: **13.10.86 DE 3634836**

(43) Veröffentlichungstag der Anmeldung:
**27.04.88 Patentblatt 88/17**

(45) Bekanntmachung des Hinweises auf die
Patenterteilung:
**28.10.92 Patentblatt 92/44**

(84) Benannte Vertragsstaaten:
**AT BE CH FR IT LI LU**

(56) Entgegenhaltungen:
**DE-A- 3 438 293**
**US-A- 4 008 369**

(73) Patentinhaber: **TELENORMA GMBH**
**Mainzer Landstrasse 128-146**
**W-6000 Frankfurt/Main(DE)**

(72) Erfinder: **Auf der Heide, Horst**
**Hortensienweg 5**
**W-4830 Gütersloh(DE)**

## Beschreibung

Die Erfindung betrifft eine Fernsteuereinrichtung mit einer Sende- und Empfangseinrichtung, die über eine für mehrere Fernsteuereinrichtungen gemeinsame Datenleitung oder über einen anschlußindividuellen Datenkanal an einer, mit der Steuereinrichtung einer Fernmelde- oder Fernsprechvermittlungsanlage verbundenen oder einen Teil derselben bildenden zentralen Erfassungs- und Steuereinrichtung angeschlossen ist, der Fernsteuereinrichtung in serieller Form Steuerbefehle über die Datenleitung bzw. den Datenkanal übermittelt werden, welche durch die Eingabe von bestimmten Ziffern an einem Fernsprechapparat der Fernmelde- oder Fernsprechvermittlungsanlage auslösbar sind und durch die Steuerbefehle Schaltmaßnahmen in der Fernsteuereinrichtung ausgelöst werden, wobei mit Hilfe von Schaltmitteln ein für mehrere Benutzer vorgesehenes Fernsehgerät ein- und ausgeschaltet und der Tonanschluß desselben zu einem benutzerindividuellen elektroakustischen Wandler durchgeschaltet wird.

Eine derartige Fernsteuereinrichtung ist bereits bekannt. So wird in der DE-A-34 38 293 ein Verfahren und eine Schaltungsanordnung zur Erfassung der gebührenpflichtigen Benutzung von mit einem Kopfhöreranschluß versehenen Fernsehgeräten durch verschiedene Personen beschrieben, wobei jeder Person ein Bediengerät zum Anschluß eines Lautsprechers oder Kopfhörers zugeordnet ist. Dabei wird durch die Eingabe einer Kennziffer an einem der betreffenden Person zugeordneten Fernsprechapparat eine Verbindung zu einer zentralen Erfassungs- und Steuereinrichtung hergestellt, wobei durch Nachwahl einer ersten Ziffer in der Erfassungs- und Steuereinrichtung in einem personenindividuellen Speicherbereich der augenblickliche Zeitpunkt eingetragen und die Fernsteuereinrichtung veranlaßt wird, das Fernsehgerät einzuschalten und der Kopfhöreranschluß des Fernsehgerätes mit dem betreffenden Bediengerät zu verbinden.

Die Fernsteuereinrichtung ist dabei entweder über eine für mehrere Fernsteuereinrichtungen gemeinsame Datenleitung oder über einen anschlußleitungsindividuellen Datenkanal mit der zentralen Erfassung- und Steuereinrichtung verbunden. Diese sendet gezielt entsprechende Steuerbefehle an die betreffende Fernsteuereinrichtung, welche daraufhin die entsprechenden Schaltmaßnahmen veranlaßt. Zu diesem Zweck ist die Fernsteuereinrichtung mit einer Sende- und Empfangseinrichtung ausgestattet. Weitere Einzelheiten über den Aufbau und die Funktion der bekannten Fernsteuereinrichtung lassen sich jedoch der DE-A-34 38 293 nicht entnehmen.

Die Aufgabe der Erfindung besteht nun darin, eine derartige Fernsteuereinrichtung so auszubilden, daß diese für weitere Aufgaben eingesetzt werden kann.

Diese Aufgabe wird dadurch gelöst, daß die Empfangseinrichtung als Schieberegister ausgebildet ist, welches mehrere Gruppen von Ausgängen aufweist, wobei an einer ersten Gruppe von Ausgängen ein Decoder/Speicher zur Ansteuerung der Schaltmittel, an einer zweiten Gruppe von Ausgängen ein Speicher und an einer dritten Gruppe von Ausgängen ein Zähler/Speicher angeschlossen ist, wobei der Speicher und der Zähler/Speicher zur Steuerung der Funktionen des Fernsehgeräts dient.

Auf diese Weise wird beispielsweise ein Patient in einem Krankenzimmer, in welchem ein Fernsehgerät aufgestellt ist, nicht nur in bekannter Weise in die Lage versetzt, über seinen Fernsprechapparat das Fernsehgerät ein- und auszuschalten und den Tonanschluß desselben mit seinem Kopfhöreranschluß oder Kissenlautsprecher zu verbinden, sondern auch mit Hilfe des Fernsprechapparates das gewünschte Fernsehprogramm auszuwählen, indem über die Wähleinrichtung des Fernsprechapparates entsprechende Ziffern eingegeben werden, die über die Fernsprechvermittlungsanlage der zentralen Erfassungs- und Steuereinrichtung zugeführt werden, welche daraufhin entsprechende Steuerbefehle an die dem betreffenden Raum zugeordnete Fernsteuereinrichtung sendet.

In der US-A-4,008,369 wird ein Abonnentenkabelfernsehsystem für Hotels und Motels mit einer Telefonschnittstelle beschrieben, bei welchem die Kanalauswahl ebenfalls über einen an einer Fernsprechvermittlungsanlage angeschlossenen Fernsprechapparat erfolgt. Die Fernsprechvermittlungsanlage ist mit einer Steuereinrichtung verbunden, welcher die über die Wähltastatur eingegebene Zimmernummer und die Kanalnummer übergeben wird, worauf diese dann eine Trägerfrequenz auswählt, welche zur Übertragung des gewünschten Fernsehprogramms dient. Gleichzeitig wird über die noch bestehende Fernsprechverbindung zu einer am Fernsprechapparat angeschlossenen Raumsteuereinrichtung eine entsprechende Information übermittelt, die an dem gemeinsamen Übertragungskabel angeschlossen ist und aufgrund der übermittelten Information den Empfang des gewünschten Programms durch das an der Raumsteuereinrichtung angeschlossene Fernsehgerät freigibt.

Weitere Vorteile ergeben sich aus den Unteransprüchen.

Die Erfindung wird anhand eines Ausführungsbeispiels näher erläutert, welches in der Zeichnung dargestellt ist.

Es zeigt:

Fig. 1  die Schaltungsanordnung der Fernsteuereinrichtung und

Fig. 2 der Anschluß der Fernsteuereinrichtung an eine Fernsprechvermittlungsanlage.

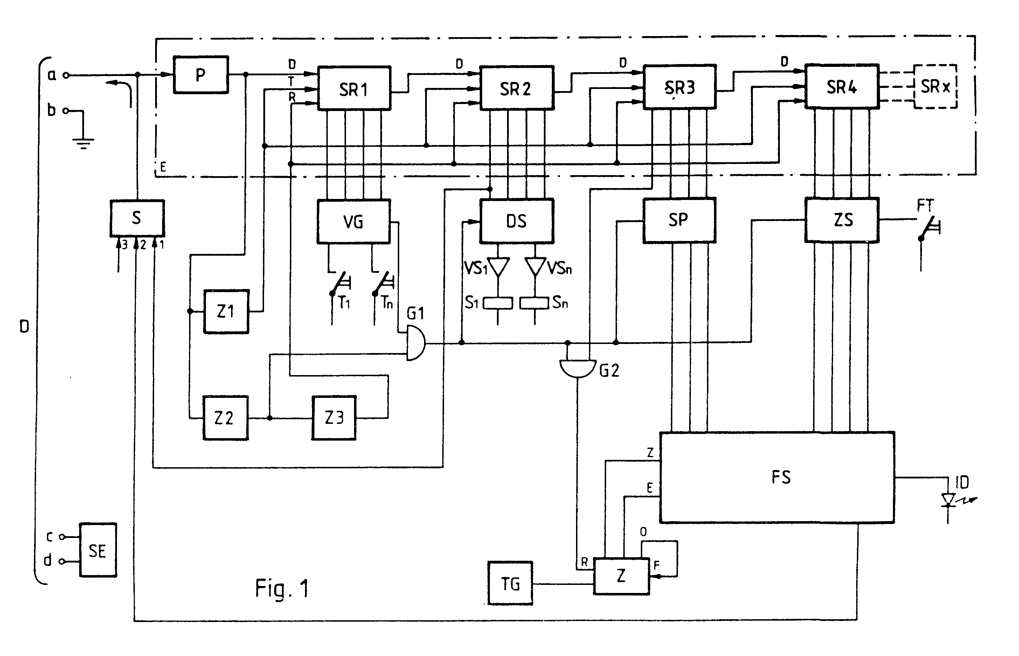

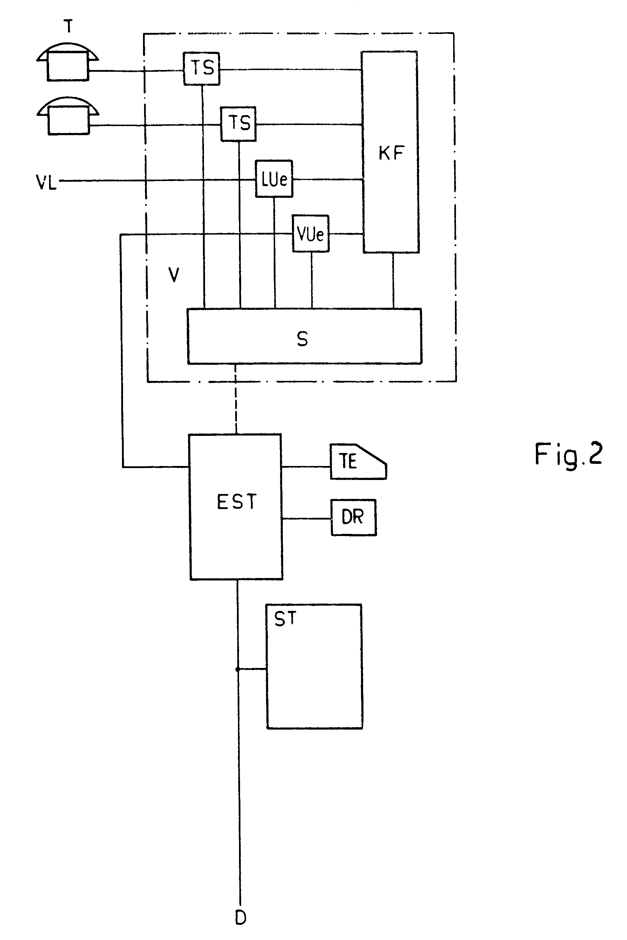

Die in Fig. 1 gezeigte Empfangseinrichtung E besteht aus einem oder aus mehreren hintereinander geschalteten Schieberegistern SR. Erfolgt die Übermittlung der von der Erfassungs- und Steuereinrichtung EST (s. Fig. 2) ausgesendeten Informationen mit Hilfe der Frequenzmodulation, so wird dem Schieberegister SR ein PLL⁻ (Phase Locked Loop-) Baustein P vorgeschaltet, welcher die Eingangssignale demoduliert und an seinem Ausgang die Informationen in serieller Form weitergibt. Das Schieberegister SR weist mehrere Gruppen von Ausgängen auf bzw. die einzelnen Schieberegister SR1 bis SR4 weisen Ausgänge auf, die mit weiteren Einrichtungen verbunden sind. So sind beispielsweise die Ausgänge SR1 mit einer Vergleichseinrichtung VG, die Ausgänge SR2 mit einem Decoder/Speicher DS, die Ausgänge SR3 mit einem Speicher SP und die Ausgänge SR4 mit einem Zähler/Speicher ZS verbunden.

Die am Ausgang des PLL-Bausteins P auftretenden Signale werden einem Zeitglied Z1 zugeführt, welches aus diesen jeweils in der Mitte eines Informationsbits liegende Abtastimpulse erzeugt, die dem bzw. den Takteingängen T des bzw. der Schieberegister zugeführt werden und auf diese Weise das Durchlaufen der Information durch das bzw. die Schieberegister steuern. Das Eintreffen der Signale wird durch ein zweites Zeitglied Z2 überwacht, welches beim Ausbleiben der Signale ein Freigabesignal erzeugt, welches einem UND-Gatter G1 zugeführt wird. Bleiben für eine vorgegebene Zeit die Signale aus, so wird dies als Zeichen dafür gewertet, daß eine vollständige Information in den Schieberegistern vorhanden ist. Anstelle dieser zeitlichen Überwachung könnte auch ein Start- bzw. Stopzeichen treten, dessen Vorhandensein an einer bestimmten Stelle innerhalb des Schieberegisters als Freigabesignal benutzt werden kann. Das Ausgangssignal des zweiten Zeitgliedes wird einem dritten Zeitglied ZR3 zugeführt, welches an seinem Ausgang ein Rückstellsignal für das bzw. die Schieberegister erzeugt. Die durch das dritte Zeitglied ZR3 erzeugte Zeitverzögerung dient zur Übernahme des Inhalts des bzw. der Schieberegister in die nachgeschalteten Einrichtungen. Diese Zeit ist kürzer als die Zeit zwischen zwei Informationen. Die an den Ausgängen SR1 angeschlossene Vergleichseinrichtung VG ist mit Schaltern oder Tasten T1 bis Tn verbunden, die zur Einstellung der der betreffenden Fernsteuereinrichtung zugeteilten Adresse dienen. Stimmt die an den Ausgängen SR1 anliegende Adresse mit der durch die Schalter oder Tasten T1 bis Tm eingestellten Adresse überein, so erzeugt die Vergleichseinrichtung VG an ihrem Ausgang ein Freigabesignal, welches dem UND-Gatter G1 zugeführt wird. Bei gleichzeitigem Anliegen dieses Freigabesignals und des vom Zeitglied Z2 erzeugten Freigabesignals wird am Ausgang des UND-Gatters G1 ein Signal erzeugt, welches zur Freigabe der Einrichtungen DS, SP und ZS dient. Der an den Ausgängen SR2 angeschlossene Decoder/Speicher DS dient zur Ansteuerung der Relais S1 bis Sn über die Verstärker VS1 bis VSn. Diese Relais S1 bis Sn, die als monostabile Relais ausgebildet sind, dienen zur Durchschaltung des Kopfhörerausgangs eines nicht gezeigten Fernsehgerätes zum Kopfhörer oder Kissenlautsprecher des Benutzers.*Sind die Relais S1 bis Sn als bistatile Relais ausgebildet, so kann die Einrichtung DS als Decoder ohne Speicherwirkung ausgebildet sein. Es ist in diesem Fall jedoch darauf zu achten, daß die Verzögerungzeit des Zeitgliedes Z3 größer als die Ansprechzeit der Relais S1 bis Sn sein muß.

Die Ausgänge SR3 sind mit einem Speicher SP und die Ausgänge SR4 sind mit einem Zähler/Speicher ZS verbunden, deren Ausgänge an einem Fernsteuersender FS angeschlossen sind. Der Fernsteuersender FS enthält mit Ausnahme der Eingabetastatur sämtliche Einrichtungen einer drahtlosen Fernbedieneinrichtung für Fernsehgeräte, wobei die entsprechenden Informationen einer betätigten Taste der Fernbedienung durch die Einrichtungen SP und ZS geliefert werden. Bei dem vorliegenden Ausführungsbeispiel wird davon ausgegangen, daß lediglich die Kanalauswahl steuerbar ist. Es ist jedoch auch denkbar, in gleicher Weise weitere Tastenfunktionen durch den Speicher SP nachzubilden.

Da bei mehr als neun Kanälen zunächst die Zehnerziffer und anschließend die Einerziffer einzugeben ist, ist ein Zähler Z vorhanden, welcher mindestens drei Schritte aufweist, wobei der letzte Schritt mit dem Freigabeeingang des Zählers verbunden ist und auf diese Weise den Zähler in dieser Stellung festhält. Sobald ein Freigabesignal von einem Ausgang SR3 an dem UND-Gatter G2 anliegt und das Signal vom Ausgang des UND-Gatters G1 eintrifft, wird über das UND-Gatter G2 der Zähler Z zurückgesetzt, worauf dieser vom Taktgeber TG gesteuert zu laufen beginnt und nacheinander die durch die Einrichtungen SP und ZS eingestellte Zehner- und Einerziffer an den Eingängen Z und E des Fernsteuersenders FS freigibt, worauf die entsprechenden Informationen über die Infrarotdiode ID an das nicht gezeigte Fernsehgerät gesendet werden und dort zur Kanaleinstellung dienen. Gleichzeitig liefert der Fernsteuersen-

* und zur Einschaltung des Fernsehgerätes

der FS ein Signal an die Sendeeinrichtung S, die daraufhin ein Quittungssignal über die Datenleitung D an die nicht gezeigte Erfassungs- und Steuereinrichtung sendet.

Bei dem vorliegenden Ausführungsbeispiel wird davon ausgegangen, daß eine vollständige Information in Form eines Telegramms mit einer Länge von 32 bit übertragen wird. Dabei weist das Schieberegister SR1 eine Länge von 16 bit, das Schieberegister SR2 eine Länge von 8 bit und die Schieberegister SR3 und SR4 je eine Länge von 4 bit auf. Das Schieberegister SR2 hat jedoch nur vier Ausgänge, da die übrigen vier bit im vorliegenden Fall nicht benutzt werden. Zur Kennzeichnung eines Relais S dienen drei bit, wobei die Relaisadresse 000 nicht benutzt wird, so daß maximal sieben Relais angesteuert werden können. Das bedeutet, daß bis zu sieben Personen in einem Raum das gemeinsame Fernsehgerät benutzen können. Die vierte Bitstelle dient einerseits zur Kennzeichnung, ob die Relais ein - oder ausgeschaltet werden sollen, und andererseits in Verbindung mit der nicht benutzten Relaisadresse zur Durchführung von Routineprüfungen. Auf diese Weise ist es möglich, außerhalb der Benutzungszeit die Datenleitung D und die angeschlossenen Fernsteuerungen im Rahmen einer Routineprüfung zu überprüfen, wobei durch Aussendung eines entsprechenden Telegramms ein bestimmtes Signal an dem betreffenden Ausgang SR2 erscheint, welches der Sendeeinrichtung S zugeführt wird und die Aussendung eines Quittungssignals über die Datenleitung D an die nicht gezeigte Erfassungs- und Steuereinrichtung veranlaßt.

Die Sendeeinrichtung S ist derart ausgebildet, daß in Abhängigkeit von unterschiedlichen Kriterien unterschiedliche Quittungssignale auf die Datenleitung D ausgesendet werden können. Dies kann nun entweder mit Hilfe eines entsprechenden Schieberegisters zwischen zwei ankommenden Telegrammen oder auch durch das Anlegen unterschiedlicher Spannungspegel an die Datenleitung DL geschehen. Im letzteren Fall ist eine Fernspeisung über die Datenleitung D nicht möglich, so daß diese zweiadrig ausgeführt werden kann, wobei die Datenübertragung über das Adernpaar a/b und die Speisung über das Adernpaar c/d auf die Speiseeinrichtung SE erfolgt, die dann die Speisung der Fernsteuereinrichtung übernimmt.

Es ist auch denkbar, die Datenübertragung anstelle über eine Datenleitung D über die Antennenzuleitung, mit welcher sämtliche Fernsehgeräte verbunden sind oder auch über das Lichtnetz durchzuführen. Weiterhin ist auch denkbar, die Fernsteuereinrichtung aus dem nicht gezeigten Fernsehgerät zu speisen, und zwar über den für den Anschluß einer Fernsehkammera vorgesehenen Steckanschluß. Die Fernsteuereinrichtung selbst kann auch anstelle einer Videotext-Einrichtung in dem Fernsehgerät selbst untergebracht werden, in diesem Fall entfällt die Infrarot-Diode ID, da der Fernsteuersender FS direkt mit dem Fernsehgerät verbunden ist. Ebenso ist die Unterbringung in einem Gehäuse oder auch unter Putz an einer beliebigen Stelle innerhalb des betreffenden Raumes denkbar, wobei jedoch dafür Sorge zu tragen ist, daß die Infrarot-Diode ID ihre Strahlung ungehindert abgeben kann, so daß diese auch von dem Infrarot-Empfänger des nicht gezeigten Fernsehgeräts aufgenommen werden kann.

An der Fernsteuereinrichtung kann auch eine manuell betätigbare Taste FT angeschlossen werden, die zur manuellen Einstellung eines gewünschten Kanals benutzt werden kann. Werden nun die zu empfangenden Programme nach Preisstaffeln geordnet, wobei auch die Möglichkeit besteht, kostenlose Programme zu empfangen, dann ist es zweckmäßig, mit Hilfe der Fortschaltetaste FT nur die Einerziffern der Kanäle zur Auswahl freizugeben, wobei die Zehnerziffer nach wie vor von der nicht gezeigten Erfassung- und Steuereinrichtung aufgrund einer entsprechenden Wahlinformationseingabe bestimmt wird, wodurch eine ordnungsgemäße Gebührenerfassung gewährleistet ist.

Der Einsatz der Fernsteuereinrichtung ist jedoch nicht nur auf das beschriebene Ausführungsbeispiel beschränkt. Vielmehr kann die Steuereinrichtung für weitere Aufgaben herangezogen werden. Hierzu können einmal die nicht benutzten Ausgänge SR2 herangezogen werden, es ist jedoch auch denkbar, für zusätzliche Aufgaben an das Schieberegister SR4 weitere Schieberegister SRx anzuschließen, wobei in diesem Fall entsprechend längere Telegramme notwendig sind. Weiterhin können auch anstelle der mit den Ausgängen SR2 bis SR4 verbundenen Einrichtungen für den Einsatzzweck entsprechend geeignete Einrichtungen angeschlossen werden.

So ist beispielsweise als zusätzliche Aufgabe die Durchführung der Steuerung von Bildschirmtextanzeigen denkbar, wobei ein Krankenhauspatient die Speisekarte auf dem Bildschirm abrufen kann und die Möglichkeit besteht, die Essensauswahl über die Wähltastatur des Fernsprechapparates zu treffen. Eine weitere Möglichkeit im Rahmen des Bildschirmtextes könnte darin bestehen, daß der Arzt nach Eingabe einer zusätzlichen Schlüsselzahl zum Schutz gegen den Datenmißbrauch auf dem Bildschirm das Patientenblatt des betreffenden, im Raum befindlichen Patienten abruft. Ebenso kann der Patient auch über den Bildschirm im Rahmen des Bildschirmtextes sein Gebührenkonto für Fernsprechen oder Fernsehen abrufen.

Eine weitere Möglichkeit für den Einsatz der Fernsteuereinrichtung besteht in der Einstellung der Raumtemperatur und in der Fensterjalousiesteuerung. Die Fernsteuereinrichtung kann auch im Rahmen eines Krankenhausinformationssystems benutzt werden, wobei zusätzlich zu den Patientenzimmern auch die Stationszimmer und eine zentrale Stelle im Krankenhaus mit der erfindungsgemäßen Fernsteuereinrichtung ausgerüstet ist. Die Taste für den Patientenruf kann in diesem Fall entweder über eine Konzentrations- und Identifiziereinrichtung an der zentralen Erfassungs- und Steuereinrichtung oder an der Fernsteuereinrichtung selbst angeschlossen sein, wobei im letzteren Fall eine regelmäßige Aussendung von Telegrammen an jede Fernsteuereinrichtung zum Zwecke der Abfrage notwendig wird, wobei im abgefragten Zustand bei betätigter Schwesternruftaste ein entsprechendes Quittungssignal an die zentrale Erfassungs- und Steuereinrichtung gesendet wird. Dies hat die Aussendung eines Telegramms an diejenige Fernsteuereinrichtung zur Folge, so daß in dem betreffenden Stationszimmer ein akustisches Signal und eine entsprechende optische Anzeige erfolgt, welche die Zimmernummer, die Rufart und die Bettnummer enthält. Hierzu müßten beispielsweise die Ausgänge der Schieberegister SR3 und SR4 mit entsprechenden Decodern/Speichern verbunden werden, die an einer Anzeigevorrichtung und an einer akustischen Rufeinrichtung angeschlossen sind. Die Benutzung der Freisprecheinrichtung durch die Bedienungsperson im Stationszimmer hat die Aussendung eines Quittungssignals von der betreffenden Fernsteuereinrichtung an die zentrale Erfassungs- und Steuereinrichtung zur Folge, woraufhin diese ein entsprechendes Telegramm an zentraler Stelle angeordnete Fernsteuereinrichtung sendet. Diese Fernsteuereinrichtung ist beispielsweise mit den Ausgängen SR3 und SR4 über entsprechende Decoder/Speicher mit einem Koppelfeld der Freisprecheinrichtung verbunden, wobei durch ein entsprechendes Telegramm die Freisprecheinrichtung im Stationszimmer mit der Freisprecheinrichtung des betreffenden Patienten verbunden wird. Dabei wird aufgrund eines entsprechenden Telegramms die Fernsteuereinrichtung in dem Zimmer des betreffenden Patienten zur Steuerung einer optischen Anzeige als Quittung auf die Betätigung der Schwesternruftaste herangezogen.

Es wird noch darauf hingewiesen, daß der Einsatz der Fernsteuereinrichtung auch im Rahmen einer digitalen Fernsprechstation möglich ist, indem diese an dem Anschluß für Zusatzeinrichtun-gen der digitalen Fernsprechteilnehmerstation an-geschlossen ist.

Der Anschluß der Fernsteuereinrichtung ST an einer Fernsprechvermittlungsanlage wird in Fig. 2 gezeigt. An einem Koppelfeld KF sind Teilnehmeranschlußschaltungen TS zum Anschluß von Fernsprechapparaten T, Leitungsübertragungen LUe zum Anschluß von Verbindungsleitungen und Verbindungsübertragungen VUe zum Anschluß einer zentralen Erfassungs- und Steuereinrichtung EST angeschlossen. Die Einrichtungen TS, LUe und VUe dienen zum Empfang und Erzeugung von Leitungskriterien, sie stellen die peripheren Einrichtungen der Steuereinrichtung S der Fernsprechvermittlungsanlage dar. Aufgrund der von den periphe-ren Einrichtungen eintreffenden Informationen er-folgt der Verbindungsaufbau innerhalb des Koppelfeldes KF auf Veranlassung der Steuereinrichtung S. Es wird noch darauf hingewiesen, daß in dem Blockschaltbild bezüglich der Fernsprechvermittlungsanlage V nur diejenigen Einrichtungen gezeigt werden, die zum Verständnis der Erfindung unbedingt notwendig sind. Eine derartige Fernsprechvermittlungsanlage in Form einer Fernsprech-Nebenstellenanlage mit analoger Durchschaltung der Sprechwege wird beispielsweise in der Druckschrift " TN-Nachrichten" 1978, Heft 79, auf den Seiten 8 bis 14 beschrieben.

Die zentrale Erfassungs- und Steuereinrichtung EST weist einen oder mehrere Dateneingänge auf, welche mit den entsprechenden Verbindungsübertragungen VUe verbunden sind und zur Übermittlung von Datenworten dienen. Die zentrale Erfassungs- und Steuereinrichtung EST kann beispielsweise in Form eines Mikrocomputers realisiert sein. An der zentralen Erfassungs- und Steuereinrichtung EST ist eine zweiadrige Datenleitung D zur seriellen Übermittlung von Impulstelegrammen angeschlossen. Mit dieser Datenleitung D sind die Empfangs- und Sendeeinrichtungen ES einer Vielzahl von Fernsteuereinrichtungen ST angeschlossen. Die Fernsteuereinrichtung ST ist beispielsweise pro Raum bzw. nicht gezeigtes Fernsehgerät vorhanden.

Es wird zunächst einmal davon ausgegangen, daß jeder Person ein Fernsprechapparat T zugeordnet ist. Nach dem Aushängen des Handapparates wird zunächst eine Kennziffer gewählt, welche zur Verkehrsausscheidung dient. Die entsprechende Wahlinformation wird entweder von der Teilnehmeranschlußschaltung TS oder von einem nicht gezeigten Wahlaufnahmesatz aufgenommen und an die Steuereinrichtung S übermittelt, welche aufgrund der Wahlinformation das Koppelfeld KF veranlaßt, eine Verbindung zu einer freien Verbindungsübertragung VUe durchzuschalten. Außerdem übermittelt die Steuereinrichtung S an die Verbindungsübertragung VUe ein Identitätskennzeichen des betreffenden Fernsprechanschlusses, welches an die zentrale Erfassungs- und Steuereinrichtung EST weitergegeben wird. Mit Hilfe des Identitätskennzeichens wird ein nicht gezeigter Speicher abgesucht und der diesem Identitätskennzeichen zugeordnete personen individuelle Speicherbereich

aufgesucht. Hier wird zunächst einmal geprüft, ob dieser Speicherbereich freigegeben ist, dies geschieht zuvor vorbereitender-weise durch Eingabe des Identitätskennzeichens über das an der Erfassungs- und Steuereinrichtung EST angeschlossene Terminal TE. Über diesen Weg ist auch die Eingabe weiterer persönlicher Daten des augenblicklichen Anschlußinhabers möglich, die ebenfalls in dem betreffenden Speicherbereich eingespeichert werden. Ist der Speicherbereich freigegeben, so kann nun die vom Fernsprechapparat T eingegebene Nachwahlziffer, beispielsweise die Ziffer 1 über die Verbindungsübertragung VUe an die zentrale Erfassungs- und Steuereinrichtung EST eingegeben werden. Das Eintreffen der Ziffer hat eine entsprechende Markierung in dem betreffenden Speicherbereich und die Einspeicherung einer Angabe über den augenblicklichen Zeitpunkt zur Folge.

Nach der Einspeicherung oder aufgrund der Nachwahl einer weitere Ziffer Sendet die zentrale Erfassungs- und Steuereinrichtung EST ein Telegramm auf die Datenleitung D, durch welches die betreffende Fernsteuereinrichtung ST gekennzeichnet wird. Dieses Kennwort ist ebenfalls in dem betreffenden Speicherbereich eingespeichert, es besteht auch die Möglichkeit, daß das Identitätskennzeichen des betreffenden Fernsprechapparates mit dem Kennwort identisch ist. Durch das Telegramm wird die betreffende Fernsteuereinrichtung ST veranlaßt, das nicht gezeigte Fernsehgerät einzuschalten, den gewünschten Kanal auszuwählen und den Kopfhöreranschluß desselben mit dem Kissenlautsprecher oder Kopfhörer der betreffenden Person zu verbinden.

Bezüglich weiterer Funktionen der zentralen Erfassungs- und Steuereinrichtung ST wird auf die Beschreibung DE-A-34 38 293 verwiesen.

Der Einsatz der erfindungsgemäßen Fernsteuereinrichtung im Rahmen einer Krankenhaus-Kommunikationsanlage ist ausführlich in DE-C1-3634 834 beschrieben.

## Patentansprüche

1. Fernsteuereinrichtung mit einer Sende (S)- und Empfangseinrichtung (E), die über eine, für mehrere Fernsteuereinrichtungen (ST) gemeinsame Datenleitung (D) oder über einen anschlußindividuellen Datenkanal an einer, mit der Steuereinrichtung (S) einer Fernmelde- oder Fernsprechvermittlungsanlage (V) verbundenen oder einen Teil derselben bildenden zentralen Erfassungs- und Steuereinrichtung (EST) angeschlossen ist, der Fernsteuereinrichtung (ST) in serieller Form Steuerbefehle über die Datenleitung (D) bzw. den Datenkanal übermittelt werden, welche durch die Eingabe von bestimmten Ziffern an einem Fernsprechapparat (T) der Fernmelde- oder Fernsprechvermittlungsanlage (V) auslösbar sind und durch die Steuerbefehle Schaltmaßnahmen in der Fernsteuereinrichtung (ST) ausgelöst werden, wobei mit Hilfe von Schaltmitteln ein für mehrere Benutzer vorgesehenes Fernsehgerät ein- und ausgeschaltet und der Tonanschluß desselben zu einem benutzerindividuellen, elektroakustischen Wandler durchgeschaltet wird,
**dadurch gekennzeichnet**,
daß die Empfangseinrichtung (E) als Schieberegister ausgebildet ist, welches mehrere Gruppen von Ausgängen (SR1 bis SRx) aufweist, wobei an einer ersten Gruppe (SR2) von Ausgängen ein Decoder/ Speicher (DS) zur Ansteuerung der Schaltmittel (S1 bis Sn), an einer zweiten Gruppe (SR3) von Ausgängen ein Speicher (SP) und an einer dritten Gruppe (SR4) von Ausgängen ein Zähler/Speicher (ZS) angeschlossen ist, wobei der Speicher (SP) und der Zähler/Speicher (ZS) zur Steuerung der Funktionen des Fernsehgeräts dient.

2. Fernsteuereinrichtung nach Anspruch 1,
dadurch gekennzeichnet,
daß bei Ansteuerung des Fernsteuersenders (FS) ein Quittungssignal von der Sendeeinrichtung (S) der Fernsteuereinrichtung an die zentrale Erfassungs- und Steuereinrichtung (EST) gesendet wird.

3. Fernsteuereinrichtung nach Anspruch 1 oder 2,
dadurch gekennzeichnet,
daß unterschiedliche Quittungssignale durch unterschiedliche Spannungspegel gebildet werden.

4. Fernsteuereinrichtung nach einem der Ansprüche 1 bis 3,
dadurch gekennzeichnet,
daß ein Ausgang der ersten Gruppe (SR2) von Ausgängen mit der Sendeeinrichtung (S) der Fernsteuereinrichtung verbunden ist und daß bei Aktivierung eines der übrigen Ausgänge dieser Gruppe dieser Ausgang inaktiv bleibt, während zur Veranlassung der Aussendung eines Quittungssignals dieser Ausgang aktiv und die übrigen Ausgänge inaktiv sind.

5. Fernsteuereinrichtung nach Anspruch 1,
dadurch gekennzeichnet,
daß der Zähler/Speicher (ZS) durch ein mit diesem verbundenes Schaltmittel (FT) manuell fortschaltbar ist.

6. Fernsteuereinrichtung nach Anspruch 1,

dadurch gekennzeichnet,
daß über die zweite Gruppe (SR3) von Ausgängen die Zehnerziffer und über die dritte
Gruppe (SR4) von Ausgängen die Einerziffer
der Kanalnummer bestimmt wird.

7.    Fernsteuereinrichtung nach einem der Ansprüche 1 bis 6,
dadurch gekennzeichnet,
daß entweder weitere Gruppen von Ausgängen
(SRx) oder die Ausgänge der ersten und/oder
zweiten, und/oder dritten Gruppe (SR2, SR3,
SR4) mit einer Steuereinrichtung für Bildschirmtext, einer Anzeigevorrichtung, einer
Raumtemperatursteuerung, einer Fensterjalousiesteuerung, einer Koppelfeldsteuereinrichtung einer Freisprecheinrichtung, usw., verbunden sind.

8.    Fernsteuereinrichtung nach einem der Ansprüche 1 bis 7,
dadurch gekennzeichnet,
daß eine weitere Gruppe von Ausgängen (SR1)
an einer Vergleichseinrichtung (VG) angeschlossen ist, welche bei Übereinstimmung der
an den Ausgängen (SR1) anliegenden Information mit der durch Schalter einstellbaren Information ein Freigabesignal für die an den übrigen Ausgängen (SR2, SR3, SR4, SRx) angeschlossenen Einrichtungen erzeugt.

9.    Fernsteuereinrichtung nach einem der Ansprüche 1 bis 8,
dadurch gekennzeichnet,
daß die Datenleitung (D) durch die Antennenleitung gebildet wird, an welcher das Fernsehgerät angeschlossen ist.

10.   Fernsteuereinrichtung nach einem der Ansprüche 1 bis 8,
dadurch gekennzeichnet,
daß die Datenleitung (D) durch das Lichtnetz
gebildet wird.

11.   Fernsteuereinrichtung nach einem der Ansprüche 1 bis 10,
dadurch gekennzeichnet,
daß die Speisung der Fernsteuereinrichtung
aus dem Fernsehgerät, beispielsweise über
dessen Speiseanschluß für Zusatzeinrichtungen erfolgt.

12.   Fernsteuereinrichtung nach einem der Ansprüche 1 bis 11,
dadurch gekennzeichnet,
daß die der Fernsteuereinrichtung wie ein Videotextzusatz in das Fernsehgerät einsetzbar
ist.

**Claims**

1.    Remote control device with a transmitter
equipment (5) and receiver equipment (E),
which are connected by way of a data line (D)
common for several remote control devices
(ST), or by way of a data channel individual to
terminal, to a central detection and control
equipment (EST) connected with the control
device (S) of a telecommunications or telephone exchange (V) or forming a part of the
same, control commands in serial form are
transmitted to the remote control device (ST)
by way of the data line (D) or the data channel,
which commands can be triggered by the input
of specific codes at a telephone (T) of the
telecommunications or telephone exchange (V)
and switching measures are triggered in the
remote control device (ST) by the control commands, wherein a television apparatus provided for several users is switched on and off
with the aid of switching means and the sound
terminal of the telephone instrument is connected through to an electroacoustical transducer individual to user, characterised thereby
that the receiver equipment (E) is constructed
as a shift register which has several groups of
outputs (SR1 to SRx), wherein a decoder/store
(DS) for the driving of the switching means (S1
to Sn) is connected to a first group (SR2) of
outputs, a store (SP) is connected to a second
group (SR3) of outputs and a counter/store
(ZS) is connected to a third group (SR4) of
outputs and wherein the store (SP) and the
counter/store (ZS) serve for the control of the
functions of the television apparatus.

2.    Remote control device according to claim 1,
characterised thereby that on driving of the
remote control device (FS) an acknowledgement signal is transmitted from the transmitting
equipment (S) of the remote control device to
the central detection and control equipment
(EST).

3.    Remote control device according to claim 1 or
2, characterised thereby that different acknowledgement signals are formed by different voltage levels.

4.    Remote control device according to one of the
claims 1 to 3, characterised thereby that one
output of the first group (SR2) of outputs is
connected with the transmitter equipment (S)
of the remote control device and that on activation of one of the remaining outputs of this
group that output remains inactive, whereas for
causing the transmission of an acknowledgement signal this ouptut is active and the remaining outputs are inactive.

5. Remote control device according to claim , characterised thereby that the counter/store (ZS) can be manually stepped on by a switching means (FT) connected therewith.

6. Remote control device according to claim 1, characterised thereby, that the tens digit of the channel number is determined by the second group (SR3) of outputs and the ones digit by the third group (SR4) of digits.

7. Remote control device according to one of claims 1 to 6, characterised thereby that either further groups of outputs (SRx) or the outputs of the first and/or second and/or third group (SR2, SR3, SR4) are connected with a control equipment for picture screen text, an indicating device, a room temperature control, a window blind control, a coupling field control equipment of a free-speaking equipment, and so forth.

8. Remote control device according to one of the claims 1 to 7, characterised thereby that a further group of outputs (SR1) is connected to a comparison equipment (VG), which on correspondence of the information present at the outputs (SR1) with the information put in by switches generates a release signal for the equipment connected to the remaining outputs (SR2, SR3, SR4, SRx).

9. Remote control device according to one of the claims 1 to 8, characterised thereby that the data line (D) is formed by the aerial lead to which the television apparatus is connected.

10. Remote control device according to one of the claims 1 to 8, characterised thereby that the data line (D) is formed by the lighting mains.

11. Remote control device according to one of the claims 1 to 10, characterised thereby that the feeding of the remote control device from the television apparatus takes place, for example, by way of the feed terminal thereof for accessory devices.

12. Remote control device according to one of the claims 1 to 11, characterised thereby that the remote control device is usable as a video text accessory in the television apparatus.

**Revendications**

1. Dispositif de télécommande comprenant des dispositifs d'émission (S) et de réception (E), qui est raccordé par une ligne de données (D) commune à plusieurs dispositifs de télécommande (ST), ou par un canal de données coordonné individuellement à un raccordement, à un dispositif central de détection et de commande (EST), lequel est relié au dispositif de commande (S) d'une installation de commutation de télécommunication ou téléphonique (V) ou constitue une partie de celle-ci, dispositif de télécommande (ST) auquel sont transmises, sous forme sérielle, par la ligne de données (D) ou le canal de données, des instructions de commande pouvant être déclenchées par l'introduction de chiffres déterminés sur un poste téléphonique (T) de l'installation de commutation de télécommunication ou téléphonique et qui provoquent des commutations dans le dispositif de télécommande (ST), avec mise en marche et arrêt d'un téléviseur prévu pour plusieurs utilisateurs et avec commutation du raccordement pour le son de ce téléviseur à un transducteur électroacoustique coordonné individuellement à un utilisateur à l'aide de moyens de commutation,
caractérisé en ce que
le dispositif de réception (E) est réalisé comme un registre à décalage qui présente plusieurs groupes de sorties (SR1 à SRx), un décodeur/mémoire (DS) pour le pilotage des moyens de commutation (S1 à Sn) étant raccordé à un premier groupe (SR2) de sorties, une mémoire (SP) étant raccordée à un deuxième groupe (SR3) de sorties et un compteur/mémoire (ZS) étant raccordé à un troisième groupe (SR4) de sorties, la mémoire (SP) et le compteur/mémoire (ZS) servant à la commande des fonctions du téléviseur.

2. Dispositif de télécommande selon la revendication 1, caractérisé en ce que, lors du pilotage de l'émetteur de télécommande (FS), le dispositif d'émission (S) du dispositif de télécommande envoie un signal d'accusé de réception au dispositif central de détection et de commande (EST).

3. Dispositif de télécommande selon la revendication 1 ou 2, caractérisé en ce que différents signaux d'accusé de réception sont formés par différents niveaux de tension.

4. Dispositif de télécommande selon une des revendications 1 à 3, caractérisé en ce qu'une sortie du premier groupe (SR2) de sorties est reliée au dispositif d'émission (S) du dispositif de télécommande et que, en cas d'activation d'une des autres sorties de ce groupe, cette sortie reste inactive, tandis que, pour produire l'émission d'un signal d'accusé de réception, cette sortie est active et les autres sorties sont inactives.

5. Dispositif de télécommande selon la revendication 1, caractérisé en ce que le compteur/mémoire (ZS) peut être avancé manuellement par un moyen de commutation (FT) relié à lui.

6. Dispositif de télécommande selon la revendication 1, caractérisé en ce que le chiffre des dizaines du numéro de canal est déterminé à travers le deuxième groupe (SR3) de sorties et le chiffre des unités du numéro de canal est déterminé à travers le troisième groupe (SR4) de sorties.

7. Dispositif de télécommande selon une des revendications 1 à 6, caractérisé en ce que, ou bien des groupes supplémentaires de sorties (SRx) ou bien les sorties du premier et/ou deuxième et/ou troisième groupe (SR2, SR3, SR4) de sorties sont reliés à un dispositif de commande de télétexte, un dispositif d'affichage, une commande de la température ambiante, une commande des volets des fenêtres, un dispositif de commande d'un réseau de connexion, un dispositif téléphonique "mains libres", et ainsi de suite.

8. Dispositif de télécommande selon une des revendications 1 à 7, caractérisé en ce qu'un groupe, supplémentaire de sorties (SR1) est raccordé à un dispositif de comparaison (VG) qui, en cas de concordance de l'information appliquée à ces sorties (SR1) avec une information pouvant être établie par des commutateurs, génère un signal de libération pour les dispositifs raccordés aux autres sorties (SR2, SR3, SR4, SRx).

9. Dispositif de télécommande selon une des revendications 1 à 8, caractérisé en ce que la ligne de données (D) est constituée par la ligne d'antenne à laquelle est raccordé le téléviseur.

10. Dispositif de télécommande selon une des revendications 1 à 8, caractérisé en ce que la ligne de données (D) est constituée par le réseau électrique d'éclairage.

11. Dispositif de télécommande selon une des revendications 1 à 10, caractérisé en ce que l'alimentation du dispositif de télécommande s'effectue à partir du téléviseur, par exemple à travers le raccordement d'alimentation du téléviseur pour des dispositifs auxiliaires.

12. Dispositif de télécommande selon une des revendications 1 à 11, caractérisé en ce qu'il peut être mis en place dans le téléviseur à la façon d'un dispositif auxiliaire de vidéotexte.

Fig. 1

Fig.2